# EUROPEAN PATENT APPLICATION

(11) **EP 4 647 236 A1**
(43) Date of publication of application: **12.11.2025**
(21) Application number: 25173091.7
(22) Date of filing: 29.04.2025
(51) Int. Cl.: B29C 48/90, B29C 48/92, B29C 48/885, B29C 48/88

(54) **COOLING SYSTEM FOR COOLING A PLASTIC FILM IN A BLOWN FILM EXTRUSION APPARATUS**

(30) Priority: 06.05.2024 IT 202400010126
(71) Applicant: Syncro S.r.l., 21052 Busto Arsizio (VA) (IT)
(72) Inventor: CACCIA, Gabriele, 21052 Busto Arsizio VA (IT); RIZZOTTI, Paolo, 28100 Novara NO (IT); PIGATO, Luca, 28014 Maggiora NO (IT); BRANCA, Marco, 21052 Busto Arsizio VA (IT)
(74) Representative: Rondano, Davide

(57) **Abstract**

A secondary cooling device (12) for cooling a film in the form of a bubble (B) in a blown film extrusion apparatus for the production of plastic films is described, which comprises: a plurality of nozzles (18) arranged to delimit a central opening (20) through which the bubble (B) is intended to move during operation; an air supply system (28, 30) for supplying the nozzles (18) with cooling air; and a first adjustment system arranged to adjust the distance of the nozzles (18) from the axis (z) of the central opening (20). Each nozzle (18) is configured so as to be able to change its geometry, and the secondary cooling device (12) further comprises a second adjustment system associated with the nozzles (18) so as to adjust each time their geometry depending on the diameter of the bubble (B).

## Description

### Technical field of the invention

The present invention relates generally to a cooling system for cooling a plastic film in the form of a bubble in a blown film extrusion apparatus for the production of plastic films. More specifically, the present invention relates to a cooling system of the type comprising a main cooling device, which is arranged immediately downstream of the extrusion head through which the plastic film is extruded and is formed generally by a cooling ring through which the bubble is caused to pass and/or by an internal cooling device (commonly known as IBC device, from *"Internal Bubble Cooling*")*,* and a secondary cooling device, which is arranged downstream of the main cooling device, specifically downstream of the so-called film frost line, i.e., after the film has finished the dominant phase of transition from liquid phase (melt) to solid phase (film), so as to further cool the film but without affecting its thickness profile.

### State of the art

As is well known, there are currently two main types of devices for cooling a film in the form of a bubble in a blown film extrusion apparatus for plastic film production, namely a first type (cooling ring) operating outside the bubble and a second type (IBC) operating inside the bubble. Both these types of cooling devices have the function of cooling the molten plastic film (melt) coming out of the extrusion head for the purpose of inducing a phase transition of the plastic material from liquid to solid phase and determining, together with the bubble inflation and the longitudinal tensile action exerted on the bubble by the pulling system of the apparatus, the thickness the film will take after the phase transition.

Once the phase transition has been completed, the extent of the cooling action caused by such cooling devices decreases dramatically, until it becomes zero shortly after (i.e., just above) the frost line. At that point, subsequent cooling of the bubble occurs simply by heat exchange with the surrounding environment.

In some cases it may happen that the bubble, after completing the phase transition and thus having passed the frost line (which is usually generated between 100°C and 140°C), arrives at the pulling device with a temperature that is still high enough to cause the phenomenon known as *"blocking"* or *"nip blocking."* In other words, if the film is too hot, then during the crushing in the calender of the pulling device it may at some points remelt briefly and then solidify soon afterwards, thus creating areas of bonding between the two faces of the flat tubular film that is obtained with the pulling device. This phenomenon causes several problems to plastic film producers: for example, if the plastic film production apparatus includes a cutting system designed to remove the edges of the flat tubular film to obtain two separate films to be wound onto two reels, in the bonding areas between the two faces of the flat tubular film the film will not split into two parts, thereby leading to rips, tears, holes, etc.

To overcome this drawback, it is already known to add a secondary cooling device downstream of the main cooling device formed by the cooling ring and/or the IBC device. More precisely, such a secondary cooling device is arranged downstream of the frost line and is configured to blow suitably cooled air onto the outer surface of the bubble after the latter has completed the phase transition and moves towards the pulling device with a substantially cylindrical shape (while in the section below the frost line the bubble has an approximately parabolic profile).

An example of a known secondary cooling device is the one produced by the company VarDAR Systems LTD. Such a device comprises a plurality of converging arc elements mounted on a support structure arranged around the bubble: each of these arc elements has at one of its ends a nozzle having a slit facing radially inwards, through which air is blown to cool the bubble.

A further example of a known secondary cooling device is the one produced by the company Kdesign GmbH under the trade name CENTER-Freeze. Such a device comprises a plurality of straight nozzles arranged around the bubble, tangential thereto, and each having a series of holes on the side facing the bubble, through which suitably cooled air is blown onto the outer surface of the bubble.

Both these known devices are provided with adjustment mechanisms to match bubbles with greatly different diameters, particularly up to a 1:4 ratio of maximum to minimum bubble diameter. However, neither of these known devices is capable of ensuring a uniform distance between the nozzles and the outer surface of the bubble. The device CENTER-Freeze produced by KDesign GmbH inherently suffers from this problem, regardless of the bubble diameter, as it provides for the use of straight nozzles and a straight line can only be tangent to an arc at one point. The device produced by VarDAR Systems LTD exhibits a better behaviour in this respect, but only to some extent, since as the difference between the radius of curvature of the arc elements and the radius of the bubble circumference increases, the difference between the minimum distance and the maximum distance between the slit(s) of each nozzle and the outer surface of the bubble increases. Since the point distance between the nozzle from which the cooling air is emitted and the outer surface of the bubble has a strong impact on the cooling efficiency at that point (the greater the distance, the more the air exiting the nozzle slows down, disperses, heats up, etc.), a wide range of variability in this distance means that the cooling action is not homogeneous around the bubble circumference. This may cause inhomogeneities in the physical-mechanical properties of the film, so that the film may have more elastic bands alternating with more rigid bands, or, in the case of a shrink film, bands that retract in a differentiated manner under the action of heat.

### Summary of the invention

It is therefore an object of the present invention to provide a secondary cooling device for cooling a plastic film in the form of a bubble in a blown film extrusion apparatus, downstream of the film frost line, which is not affected by the drawbacks of the prior art discussed above, in particular, which allows to reduce, compared to the prior art, the difference between the minimum distance and the maximum distance between the slit(s) of each nozzle and the outer surface of the bubble, with the same bubble diameter, and is therefore capable of exerting a more uniform cooling action on the bubble than the prior art.

This and other objects are fully achieved according to the present invention by a cooling device as defined in the attached independent claim 1.

Further advantageous aspects of the cooling device according to the present invention are defined in the dependent claims, the subject-matter of which is to be intended as forming an integral part of the following description.

In summary, the invention is based on the idea of providing a secondary cooling device comprising:
- a plurality of nozzles arranged so as to delimit a central opening through which the bubble is caused to pass during operation, each nozzle having at least one outlet slit;
- an air supply system for supplying the nozzles with cooling air; and
- a first adjustment system arranged to adjust the distance of the nozzles from the axis of said central opening;
wherein each nozzle is configured to be able to change its geometry, and wherein the cooling device further comprises a second adjustment system associated with the nozzles so to adjust each time their geometry depending on the diameter of the bubble.

By virtue of such a configuration, the secondary cooling device according to the invention is able to adapt itself to changes in the bubble diameter by suitably changing the geometry of the nozzles, and it thus allows to reduce, compared to the prior art, the changes in the distance between each point of the outlet slit(s) of each nozzle and the outer surface of the bubble and therefore to ensure a more uniform cooling action.

According to an embodiment of the invention, each nozzle comprises two nozzle parts separate from each other and rotatable relative to each other about respective axes of rotation parallel to the axis of the central opening, and the second adjustment system is configured to adjust the orientation of the two nozzle parts of each nozzle about the respective axes of rotation and thus adjust the relative orientation of the two nozzle parts.

In this case, each of the two nozzle parts of each nozzle of the device is preferably configured so that the outflow section of each outlet slit of said nozzle part has an arc-shaped outline, particularly in the shape of an arc of circumference.

Advantageously, each of the two nozzle parts of each nozzle of the device has a single continuous outlet slit, rather than a plurality of slits or holes, so as to ensure a flow of cooling air out of said nozzle part which is as uniform as possible.

According to another embodiment of the invention, each nozzle has an elastically flexible structure, and the second adjustment system is configured to bend this elastically flexible structure in one direction or the other so as to vary the shape and/or relative arrangement of the outlet slit(s) of each nozzle depending on the bubble diameter.

### Brief description of the drawings

Further features and advantages of the present invention will result more clearly from the following description, given purely as a non-limiting example with reference to the accompanying drawings, in which:
- Figure 1 is a perspective view showing a portion of a blown film extrusion apparatus for the production of plastic films, with a cooling system including a cooling ring, as the main cooling device, and a secondary cooling device according to an embodiment of the present invention;
- Figures 2 and 3 are perspective views of the secondary cooling device of Figure 1, in a first operating condition for cooling a large-diameter bubble and in a second operating condition for cooling a small-diameter bubble, respectively;
- Figures 4 and 5 are perspective views, from two different angles, of a nozzle, with its support element, of the secondary cooling device of Figure 1;
- Figures 6 and 7 are schematic views in horizontal section showing the nozzle and the arm of Figures 4 and 5, in the above-mentioned first and second operating conditions of the secondary cooling device, respectively; and
- Figure 8 is a perspective view similar to that of Figure 1, but in which the secondary cooling device is integrated into the bubble guide device of the blown film extrusion apparatus.

### Detailed description

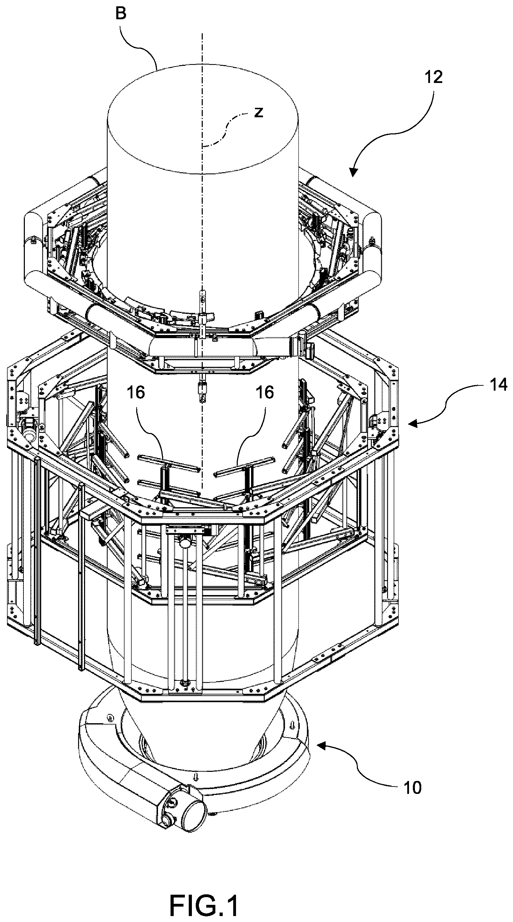

With reference first to Figure 1, a blown film extrusion apparatus for the production of plastic films is provided, in a per-se-known manner, with a cooling system for cooling the film in the form of a bubble B (hereafter simply referred to as "bubble", for convenience) that emerges from an extrusion head (not shown).

The cooling system comprises a main cooling device 10, which is arranged immediately downstream (i.e., above, considering that the bubble B is advanced upwards in a substantially vertical direction) of the extrusion head, and a secondary cooling device 12, which is arranged downstream of the main cooling device 10, specifically downstream of the film frost line, i.e., after the film has finished the dominant phase of transition from liquid (melt) to solid (film) phase, so as to further cool the film but without affecting the thickness profile thereof. In the example shown, the main cooling device 10 is a cooling ring, which - as is well known - operates by blowing cooling air onto the outer surface of the bubble B, but an internal cooling device (or IBC device), which operates by blowing cooling air onto the inner surface of the bubble B, might also be provided for, in addition to the cooling ring. A bubble guide device 14 comprising, in a per-se-known manner, a plurality of guide elements 16 arranged around bubble B is typically arranged between the main cooling device 10 and the secondary cooling device 12.

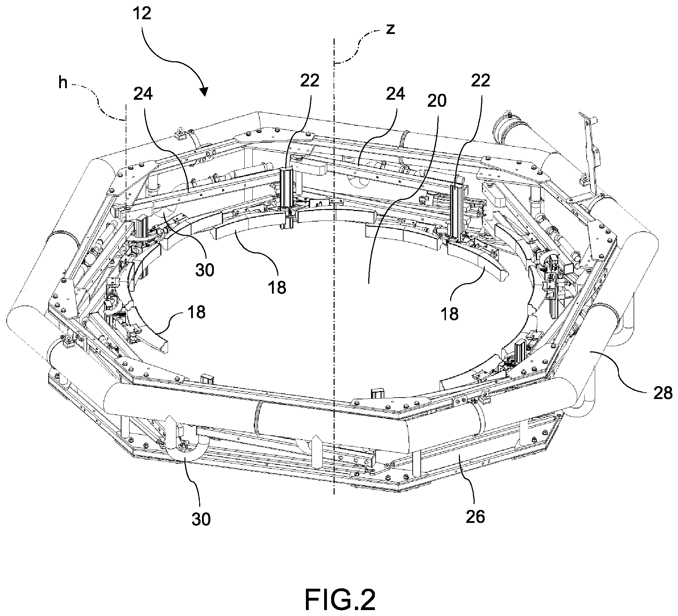

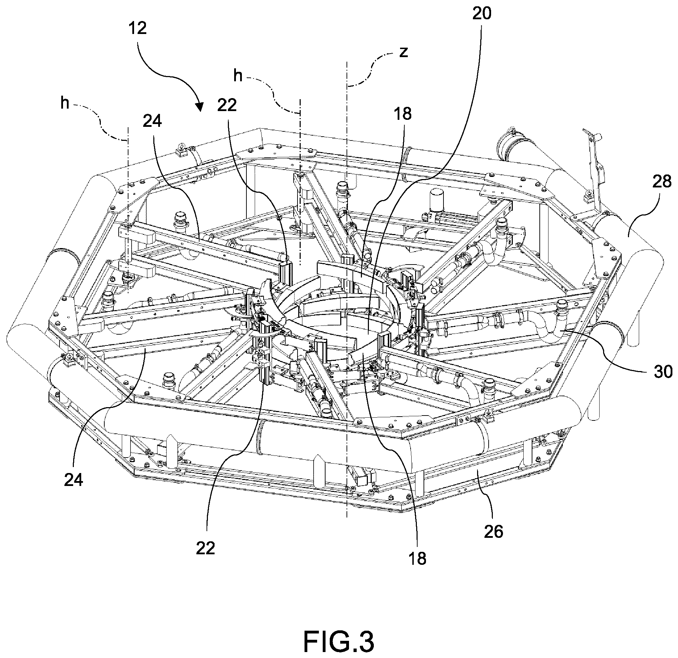

Referring now to Figures 2 and 3, the secondary cooling device 12 first comprises a plurality of nozzles 18 arranged so as to delimit a central opening 20, through which the bubble B is intended to move during operation. The axis of the central opening 20 is denoted by z and, during operation, substantially coincides with the axis of the bubble B.

Each nozzle 18 is mounted on a respective support element 22, which is made, for example, as a vertical beam element. Preferably, each nozzle 18 is mounted on the respective support element 22 so as to be vertically movable, i.e., movable parallel to the axis z of the central opening 20. Each support element 22 is mounted at the radially inner end of a respective movable arm 24 so as to be orientable about a vertical axis (i.e., an axis parallel to the axis z of the central opening 20). In turn, each arm 24 is hinged at its radially outer end to an annular support structure 26 so as to be pivotable relative to that structure about a respective vertical hinge axis h (i.e., a hinge axis parallel to the axis z of the central opening 20). First actuation means (not shown) are associated with the movable arms 24 and comprise, for example, a linear actuator interposed between the support structure 26 and one of the movable arms 24 to control the rotation of that arm about its respective hinge axis h, as well as a system of connecting rods that connect the movable arms 24 to each other so as to ensure that those arms rotate synchronously about their respective hinge axes h.

The movable arms 24, together with the aforementioned first actuation means, serve as first adjustment system arranged to adjust the distance of the support elements 22, and hence of the nozzles 18, relative to the axis z of the central opening 20. In this regard, Figure 2 shows a first operating condition of the secondary cooling device 12, in which the movable arms 24 are oriented so as to arrange the support elements 22, and hence the nozzles 18, at the maximum distance from the axis z of the central opening 20, for cooling a large-diameter bubble, while Figure 3 shows a second operating condition of the secondary cooling device 12, in which the movable arms 24 are oriented so as to arrange the support elements 22, and hence the nozzles 18, at the minimum distance from the axis z of the central opening 20, for cooling a small-diameter bubble. Advantageously, the orientation of the movable arms 24 can be continuously varied so that the distance of the support elements 22, and hence of the nozzles 18, from the axis z of the central opening 20 can be continuously adjusted to precisely match the position of the nozzles 18 to the size (i.e., the diameter) of the bubble B. In particular, the secondary cooling device 12 is preferably configured to be capable of operating up to a 1:4 ratio of the maximum to minimum diameter of the bubble B.

Advantageously, a mechanism (similar to that described for example in patent application WO2016/139573 in the Applicant's name) is associated with the support elements 22 and is configured to ensure that, regardless of the angular position of the movable arms 24 about their respective hinge axes h, the support elements 22 are oriented so that their radially inner face is arranged tangentially to the bubble B, i.e., so that a line orthogonal to the plane of the radially inner face of each support element 22 passes through the axis z of the central opening 20.

According to a variant embodiment (not shown), the nozzles 18 might be directly mounted at the ends of the movable arms 24, instead of being mounted each one on a respective support element. Even in this case, however, the nozzles 18 will be mounted in such a way as to be pivotable about respective vertical axes (i.e., about respective axes parallel to the axis z of the central opening 20) to ensure the correct orientation of each nozzle 18 with respect to the bubble B.

The secondary cooling device 12 further comprises an air supply system for supplying cooling air to the nozzles 18. Preferably, the air supply system includes a distribution manifold 28, which is mounted on the support structure 26 and is in fluid communication with a source of cooling air (not shown), and a plurality of flexible tubes 30, each of which puts the distribution manifold 28 in fluid communication with a respective nozzle 18. The use of the flexible hoses 30 to put the distribution manifold 28 in fluid communication with the nozzles 18 allows to adjust the position of the nozzles even during operation of the device.

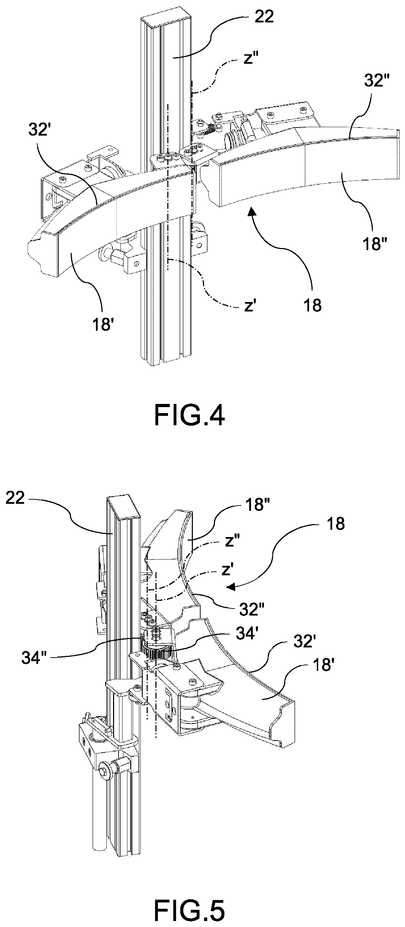

With reference now to Figures 4 and 5, each nozzle 18 comprises two nozzle parts 18' and 18" separate from each other, having respective outlet slits 32' and 32" through which the cooling air supplied to nozzle 18 by the supply system described above is emitted. Preferably, as in the example proposed herein, each of the two nozzle parts 18' and 18" has a continuous outlet slit, that is, an outlet slit that extends over the entire length of the nozzle part, instead of a plurality of outlet slits or holes, so as to ensure that the flow of cooling air exiting that nozzle part is as uniform as possible. In the example proposed herein, the outlet slits 32' and 32" are positioned at the upper edges of the radially inner faces of the two nozzle parts 18' and 18", but alternatively they might also be positioned at the lower edges of those faces. In addition, it is also possible to provide, for each nozzle part 18', 18", a first outlet slit and a second outlet slit positioned at the upper edge and the lower edge of the radially inner face of that nozzle part, respectively. In addition, each of the two nozzle parts 18' and 18" is preferably shaped so that the outflow section of the respective outlet slit 32', 32" has an arc-shaped outline, particularly in the shape of an arc of a circumference with a given radius.

The two nozzle parts 18' and 18" of each nozzle 18 are rotatable relative to each other about respective axes of rotation z' and z" parallel to the axis z of the central opening, so as to allow to vary the relative orientation of the two nozzle parts 18' and 18" to adapt it to the size (i.e., the diameter) of the bubble B. In particular, an appropriate mechanism is advantageously associated with the two nozzle parts 18' and 18" and is configured to ensure that a rotation of one nozzle part about its respective axis of rotation by a given angle and in a given direction corresponds to a rotation of the other nozzle part about its respective axis of rotation by the same angle, but in the opposite direction. For example, according to the embodiment shown in Figures 4 and 5, such a mechanism comprises a pair of gearwheels 34' and 34", which are attached to the proximal ends of the two nozzle parts 18' and 18", are mounted on the support element 22 in a rotatable manner about the axis of rotation z' and about the axis of rotation z", respectively, and permanently mesh with each other, so that a rotation of the gearwheel 34', and hence of the nozzle part 18', by a given angle and in a given direction about the axis of rotation z' corresponds to a rotation of the gearwheel 34", and hence of the nozzle part 18", by the same angle, but in the opposite direction, about the axis of rotation z".

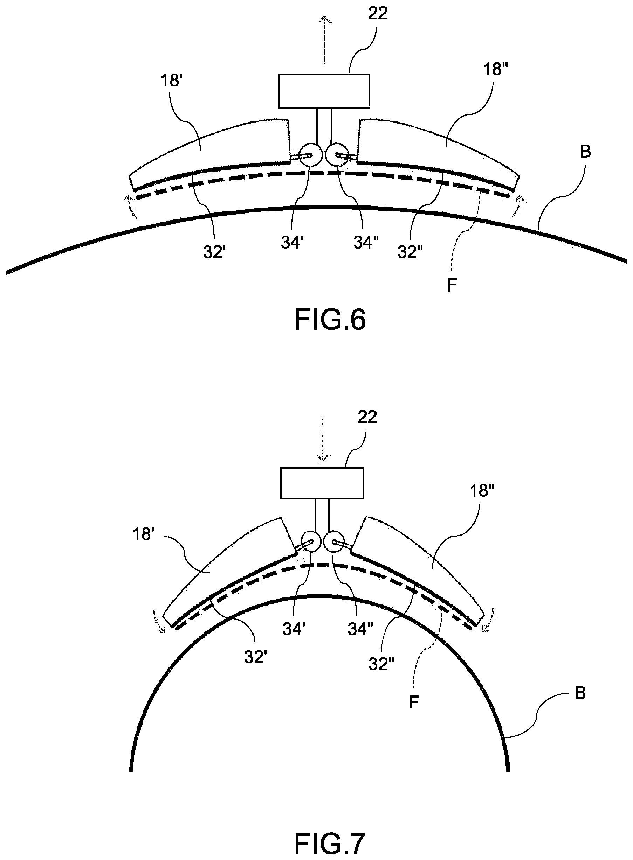

In other words, as is clear from Figures 6 and 7, the two nozzle parts 18' and 18" of each nozzle 18 can either spread apart from each other to create an air blade (shown in dashed line and denoted F) with a larger radius of curvature, and hence suitable for a large-diameter bubble B, or move closer to each other to create an air blade F with a smaller radius of curvature, and hence suitable for a small-diameter bubble B. Second actuation means (not shown) are associated with each nozzle 18 and are arranged to control the rotation of the two nozzle parts 18' and 18" about their respective axes of rotation z' and z" to vary the relative orientation of these nozzle parts. Such second actuation means act as a second adjustment system arranged to adjust the geometry of each nozzle 18, and hence of the air blade F generated by it, to adapt it to the diameter of bubble B. In this way, as the diameter of the bubble B changes, it is possible to change not only the position of the nozzles 18, by changing the distance of their support elements 22 from the axis z of the central opening 20 via the first adjustment system, but also the geometry of the nozzles 18, in the present case by relative rotation of the two nozzle parts 18' and 18", via the second adjustment system, so that the air blade F generated by each nozzle 18 has a shape as close as possible to that of the bubble B, and hence the point-to-point distance between the outflow section of the outlet slit 32' of the nozzle part 18' and the outer surface of the bubble B, as well as the point-to-point distance between the outflow section of the outlet slit 32" of the nozzle part 18" and the outer surface of the bubble B, is as constant as possible.

The second adjustment system may, as described above, be independent of the first adjustment system, in which case there are provided the aforementioned second actuation means to control the orientation of the two nozzle parts 18' and 18" of each nozzle 18 independently of the first actuation means, or, alternatively, be connected to the first adjustment system (for example, by means of a cam mechanism) so as to adjust the orientation of the two nozzle parts 18' and 18" of each nozzle 18 depending on the position of the support element 22 associated with each nozzle 18 determined by the first adjustment system via the first actuation means associated with the movable arms 24 or, more generally, so as to adjust the orientation of the two nozzle parts 18' and 18" of each nozzle 18 depending on the distance of the nozzle 18 from the axis z of the central opening 20.

Furthermore, the two nozzle parts 18' and 18" of each nozzle 18 may also be provided with an additional adjustment mechanism for adjusting their orientation about a horizontal axis of rotation, that is, for varying their inclination with respect to the horizontal plane to better follow the upward movement of the bubble B.

The secondary cooling device 12 may also include a set of sensors (for example, temperature sensors) connected to a control unit of the apparatus so as to enable the control unit to evaluate the effectiveness of the cooling process performed by the secondary cooling device 12 and, if necessary, vary appropriate operating parameters (for example, the temperature of the cooling air that is being supplied from the source of cooling air to the distribution manifold 28).

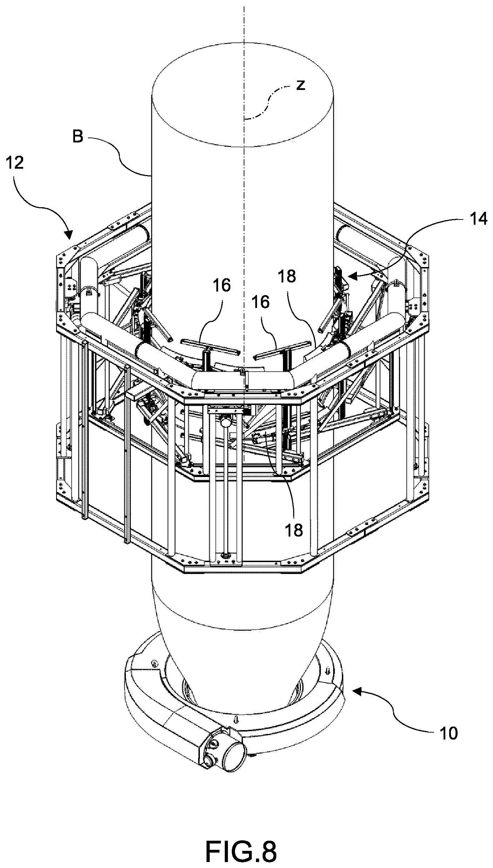

Finally, with reference to Figure 8, the secondary cooling device 12 may be integrated into the bubble guide device 14 of the blown film extrusion apparatus, in that it may share with the bubble guide device the same support structure or even share with the bubble guide device the movable arms on which the guide elements 16 are mounted. In this second case, therefore, the movable arms 24 of the secondary cooling device 12 will carry not only the nozzles 18 but also the guide elements 16.

The present invention has been described herein with specific reference to an embodiment thereof, but it is clear that other embodiments may be envisaged, which share the same inventive core with the one described here, as defined by the appended claims.

For example, according to another embodiment of the invention, each nozzle of the secondary cooling device has an elastically flexible structure, and the second adjustment system is configured to bend this elastically flexible structure in one direction or the other so as to change the shape and/or relative arrangement of the outlet slit(s) of each nozzle depending on the bubble diameter.

## Claims

1. Secondary cooling device (12) for c0ooling a film in the form of a bubble (B) in a blown film extrusion apparatus for the production of plastic films, said secondary cooling device (12) comprising:
- a plurality of nozzles (18) arranged so as to delimit a central opening (20) through which the bubble (B) is caused to move during operation, each nozzle (18) having at least one outlet slit (32', 32"),
- an air supply system (28, 30) for supplying the nozzles (18) with cooling air, and
- a first adjustment system arranged to adjust the distance of the nozzles (18) from the axis (z) of said central opening (20),
**characterized**
**in that** each nozzle (18) is configured so as to be able to change its geometry, and
**in that** it further comprises a second adjustment system associated with the nozzles (18) so as to adjust each time their geometry depending on the diameter of the bubble (B).

2. Device according to claim 1, wherein each nozzle (18) comprises two nozzle parts (18', 18") separate from each other and rotatable relative to each other about respective axes of rotation (z', z") parallel to the axis (z) of the central opening (20), and wherein the second adjustment system is configured to adjust the orientation of the two nozzle parts (18', 18") of each nozzle (18) about the respective axes of rotation (z', z"), and hence to adjust the relative orientation of said nozzle parts (18', 18").

3. Device according to claim 2, wherein each of the two nozzle parts (18', 18") of each nozzle (18) is shaped so that the outflow section of the outlet slit(s) (32', 32") of said nozzle part (18', 18") has an arc-shaped outline, in particular an outline in the shape of an arc of circumference.

4. Device according to claim 2 or claim 3, wherein said at least one outlet slit (32', 32") of each of the two nozzle parts (18', 18") of each nozzle (18) is a continuous slit, i.e., a slit extending substantially through the entire length of said nozzle part (18', 18").

5. Device according to any one of claims 2 to 4, further comprising, for each nozzle (18), a mechanism which connects the two nozzle parts (18', 18") so that a rotation of a nozzle part (18') about the respective axis of rotation (z') by a given angle and in a given direction causes a rotation of the other nozzle part (18") about the respective axis of rotation (z") by the same angle, but in the opposite direction.

6. Device according to claim 5, wherein said mechanism comprises a pair of gearwheels (34', 34"), which are each fixed to the proximal end of a respective nozzle part (18', 18"), are each rotatably mounted about a respective one of said axes of rotation (z', z") and permanently mesh with each other.

7. Device according to claim 1, wherein each nozzle has an elastically flexible structure and wherein said second adjustment system is configured to cause bending of said elastically flexible structure in either direction so as to change the shape and/or the relative arrangement of the outlet slit(s) of each nozzle depending on the diameter of the bubble (B).

8. Device according to any one of the preceding claims, wherein each nozzle (18) is orientable about an axis parallel to the axis (z) of the central opening (20).

9. Device according to any one of the preceding claims, wherein the device further comprises an annular support structure (26), and wherein said first adjustment system comprises a plurality of movable arms (24), each of which carries at a radially inner end thereof a respective nozzle (18) and is hinged at its radially outer end to the support structure (26) so as to be rotatable relative to said structure about a respective hinge axis (h) parallel to the axis (z) of the central opening (20).

10. Device according to any one of the preceding claims, further comprising a plurality of support elements (22), on each of which a respective nozzle (18) is mounted so as to be movable parallel to the axis (z) of the central opening (20).

11. Device according to claim 9 and claim 10, wherein each support element (22) is mounted on the radially inner end of a respective movable arm (24).

12. Device according to any one of the preceding claims, wherein each nozzle (18) is also pivotable relative to a plane perpendicular to the axis (z) of the central opening (20).

13. Cooling system for cooling a film in the form of a bubble (B) in a blown film extrusion apparatus for the production of plastic films, said cooling system comprising a main cooling device (10) and, downstream of said main cooling device (10), a secondary cooling device (12) according to any one of the preceding claims.

14. Blown film extrusion apparatus for the production of plastic films, comprising a cooling system according to claim 13.
